(19) Europäisches Patentamt
European Patent Office
Office européen des brevets

(11) Veröffentlichungsnummer: 0 394 195 A2

# (12) EUROPÄISCHE PATENTANMELDUNG

(21) Anmeldenummer: 90810290.8

(22) Anmeldetag: 10.04.90

(51) Int. Cl.5: C09J 163/00, C09J 175/04, C09D 5/08, C08K 5/46, C08L 63/00, C08L 75/04

(30) Priorität: 18.04.89 CH 1475/89

(43) Veröffentlichungstag der Anmeldung: 24.10.90 Patentblatt 90/43

(84) Benannte Vertragsstaaten: BE CH DE ES FR GB IT LI NL SE

(71) Anmelder: CIBA-GEIGY AG
Klybeckstrasse 141
CH-4002 Basel(CH)

(72) Erfinder: Lehmann, Hans
Steinackerstrasse 11
CH-4147 Aesch(CH)
Erfinder: Reischmann, Franz-Josef
Im Lenzen 6
D-7889 Grenzach-Wyhlen(DE)

## (54) Korrosionsbeständige Epoxid- und Polyurethanharzzusammensetzungen.

(57) Beschrieben werden korrosionsfeste Zusammensetzungen enthaltend

A1) ein Epoxidharz mit durchschnittlich zwei oder mehr 1,2-Epoxidgruppen pro Molekül, oder

A2) eine Polyhydroxyverbindung

B1) einen wärmeaktivierbaren Härter für das Epoxidharz, oder

B2) einen Isocyanathärter für die Polyhydroxyverbindung

C) falls Komponenete A ein Epoxidharz ist, ein flüssiges Copolymeres auf Basis von Butadien und mindestens einem polaren, ethylenisch ungesättigten Comonomeren, und

D) eine wirksame Menge eines Korrosionsinhibitors der Formel I

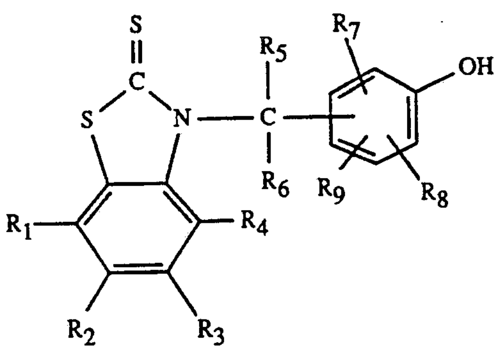

(I),

worin die Reste $R_1$ bis $R_9$ Wasserstoff oder unterschiedliche organische Reste sind.

EP 0 394 195 A2

# Korrosionsbeständige Epoxid- und Polyurethanharzzusammensetzungen

Die Erfindung betrifft neue Epoxid- und Polyurethanzusammensetzungen, die daraus erhältlichen gehärteten Produkte sowie die Verwendung von speziellen Benzthiazolderivaten als Korrosionsinhibitoren in Klebstoffen, Dicht- oder Fugenmas sen.

Klebstoffe auf Basis von Epoxid- und Polyurethanharzen sind seit langem bekannt und in der Technik des Verklebens eingeführt. In jüngerer Zeit wurden Formulierungen entwickelt, die sich als Konstruktionskleber eignen und die unter anderem bestimmte Flexibilisatoren auf Basis von Butadien-Copolymeren enthalten. Für gewisse Anwendungen, beispielsweise bei der Falznahtverklebung, müssen solche Kleber korrosionsbeständig ausgerüstet werden.

Versuche haben gezeigt, dass eine Reihe von an sich bekannten Korrosionsinhibitoren, wie z.B. Chromate, Phosphate, Amin-O oder Sarkosyl-O, in Epoxid- und Polyurethanharzformulierungen nicht den gewünschten Effekt zeigt. Die Erfindung beruht auf der überraschenden Feststellung, dass sich die Korrosionsbeständigkeit von ausgewählten Epoxid-oder Polyurethanharzformulierungen mit speziellen Benzthiazolderivaten wesentlich verbessern lässt.

Diese Benzthiazolderivate und deren Wirkung als Korrosionsinhibitoren in Anstrichstoffen und in Schmiermitteln sind aus der EP-A-259,254 bekannt.

Die vorliegende Erfindung betrifft Zusammensetzungen enthaltend

A1) ein Epoxidharz mit durchschnittlich zwei oder mehr 1,2-Epoxidgruppen pro Molekül, oder

A2) eine Polyhydroxyverbindung

B1) einen wärmeaktivierbaren Härter für das Epoxidharz, oder

B2) einen Isocyanathärter für die Polyhydroxyverbindung

C) falls Komponenete A ein Epoxidharz ist, ein flüssiges Copolymeres auf Basis von Butadien und mindestens einem polaren, ethylenisch ungesättigten Comonomeren, und

D) eine wirksame Menge eines Korrosionsinhibitors der Formel I

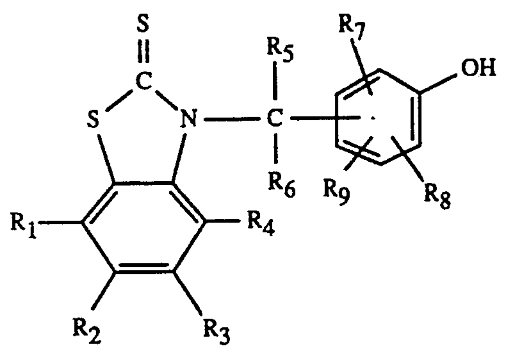

(I),

worin die Reste $R_1$, $R_2$, $R_3$ und $R_4$ unabhängig voneinander Wasserstoff, $C_1$-$C_{20}$Alkyl, $C_1$-$C_{20}$Alkoxy, $C_1$-$C_{20}$Alkylthio, $C_1$-$C_{20}$Alkylsulfonyl, $C_1$-$C_4$Halogenalkyl, Phenylthio, Benzylthio, Phenyl, $C_7$-$C_{15}$Alkylphenyl, $C_7$-$C_{10}$Phenylalkyl, Cyclopentyl, Cyclohexyl, Halogen, -COOH, -COO($C_1$-$C_4$Alkyl), -OH, $-NR_{10}R_{11}$ oder $-CONR_{10}R_{11}$ bedeuten, $R_5$ Wasserstoff oder $C_1$-$C_{12}$ Alkyl ist, $R_6$ Wasserstoff, $C_1$-$C_{12}$ Alkyl, Phenyl, Tolyl, Pyridyl, Thienyl oder Furyl ist, $R_7$ und $R_8$ unabhängig voneinander Wasserstoff, Halogen, $C_1$-$C_4$Alkoxy, $C_1$-$C_{20}$Alkyl, $C_3$-$C_{20}$Alkenyl, $C_7$-$C_{10}$Phenylalkyl, Phenyl, Cyclohexyl, Cyclopentyl,- $(CH_2)_m$-$COOR_{12}$, $-(CH_2)_m$-$CONR_{10}R_{11}$ oder eine Gruppe der Formel II bedeuten

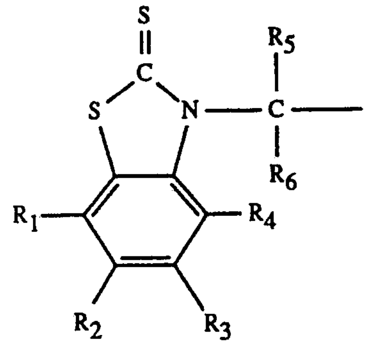

(II),

worin $R_1$ bis $R_6$ die oben definierte Bedeutung besitzen, $R_9$ Wasserstoff, $C_1$-$C_{20}$Alkyl, $C_3$-$C_{20}$Alkenyl oder Hydroxy bedeutet oder $R_8$ und $R_9$ zusammen einen Ring bilden, der am Phenolring anelliert ist und der ein carbocyclischer oder ein heterocyclischer Ring mit Sauerstoff, Stickstoff oder Schwefel als Heteroatome sein kann, welcher gegebenenfalls durch $C_1$-$C_4$Alkyl, $C_1$-$C_4$Alkoxy oder Halogen substituiert ist, $R_{10}$ und $R_{11}$ unabhängig voneinander Wasserstoff, $C_1$-$C_{20}$Alkyl, das gegebenenfalls mit Hydroxyl oder Halogen substituiert ist oder $C_3$-$C_{20}$Alkyl, das durch ein oder mehrere Sauerstoffatome unterbrochen ist, Cyclohexyl, Benzyl oder Phenyl bedeuten, oder worin die Reste $R_{10}$ und $R_{11}$ zusammen mit dem gemeinsamen Stickstoffatom eine Pyrrolidino-, Piperidino- oder Morpholinogruppe bilden und $R_{12}$ Wasserstoff, $C_1$-$C_{20}$Alkyl, das gegebenenfalls durch Hydroxyl oder Halogen substituiert ist, oder $C_3$-$C_{20}$Alkyl bedeutet, das durch ein oder mehrere Sauerstoffatome unterbrochen ist, und m 0, 1 oder 2 ist.

Bedeuten irgendwelche Reste Alkylgruppen, so kann es sich dabei um geradkettige oder verzweigte Reste handeln.

Beispiele für $C_1$-$C_4$Alkylreste sind Methyl, Ethyl, n-Propyl, Isopropyl, n-Butyl, sek.Butyl und tert.Butyl.

Beispiele für Alkylreste mit höheren C-Zahlen sind n-Pentyl, n-Hexyl, n-Octyl, 2-Ethylhexyl, 1,1,3,3-Tetramethylbutyl, 1,1,3,3,5,5-Hexamethylhexyl, n-Decyl, Isodecyl, n-Dodecyl, n-Tridecyl, n-Tetradecyl, n-Hexydecyl, n-Octadecyl und n-Eicosyl.

Bedeuten irgendwelche Reste $C_3$-$C_{20}$Alkenyl, so handelt es sich dabei z.B. um Allyl, Methallyl, 2-Butenyl, Decenyl, Undecenyl, Pentadecenyl oder Octadecenyl.

Bedeuten irgendwelche Reste Halogenalkyl, so handelt es sich dabei z.B. um Chlormethyl, Trichlormethyl, Brommethyl, 2-Chlorethyl, 2,2,2-Trichlorethyl, Trifluormethyl oder um 2,3-Dichlorpropyl.

Bedeuten irgendwelche Reste Alkoxy, Alkylthio oder Alkylsulfonyl, so handelt es sich dabei z.B. um Methoxy, Ethoxy, Isopropoxy, Butoxy, Hexyloxy, Octyloxy oder Dodecyloxy bzw. um Metylthio, tert.Butylthio oder Dodecylthio bzw. um Methylsulfonyl, Ethylsulfonyl, Hexylsulfonyl oder Dodecylsulfonyl.

Bedeuten irgendwelche Reste Alkylphenyl, so handelt es sich dabei z.B. um Tolyl, Xylyl, 4-Ethylphenyl, 4-tert.Butylphenyl, 4-Octylphenyl oder 4-Nonylphenyl.

Bedeuten irgendwelche Reste Phenylalkyl, so handelt es sich dabei z.B. um Benzyl, 1-Phenylethyl, 2-Phenylethyl, $\alpha,\alpha$-Dimethylbenzyl oder 2-Phenylpropyl.

Bedeuten irgendwelche Reste durch Sauerstoff unterbrochenes Alkyl, so handelt es sich dabei z.B. um 2-Methoxyethyl, 2-Butoxyethyl, 3,6-Dioxaheptyl oder 3,6-Dioxadecyl oder um einen Polyethylenglykolrest mit bis zu 10 Sauerstoffatomen.

Bedeuten irgendwelche Reste Halogen, so handelt es sich dabei um Fluor, Iod oder insbesondere um Chlor oder Brom.

Bilden irgendwelche Reste zusammen mit einem Benzolring einen anellierten Ring, so handelt es sich bei diesem anellierten Ring z.B. um einen Benzolring, einen Pyridinring oder einen Benzofuranring.

Als Komponente A1) der erfindungsgemässen Zusammensetzungen eignen sich praktisch alle Epoxidharze mit durchschnittlich wenigstens zwei 1,2-Epoxidgruppen pro Molekül.

Beispiele dafür sind:

I) Polyglycidyl- und Poly-($\beta$-methylglycidyl)-ester, die beispielsweise durch Umsetzung von einer Verbindung enthaltend mindestens zwei Carboxylgruppen im Molekül mit Epichlorhydrin, Glycerindichlorhydrin oder mit $\beta$-Methylepichlorhydrin in Gegenwart von Basen erhalten werden können. Beispiele für Verbindungen mit mindestens zwei Carboxylgruppen im Molekül sind gesättigte aliphatische Dicarbonsäuren, wie Adipinsäure oder Sebazinsäure; oder ungesättigte aliphatische Dicarbonsäuren, wie Maleinsäure; oder aromatische Dicarbonsäuren, wie Phthal-, Isophthal- oder Terephthalsäure; oder Copolymere von (Meth)acrylsäure mit copolymerisierbaren Vinylmonomeren, wie beispielsweise die 1 : 1 Copolymeren von Methacyrylsäure mit Styrol oder mit Methacrylsäuremethylester.

II) Polyglycidyl- und Poly-($\beta$-methylglycidyl)-ether, die beispielsweise durch Umsetzung einer Verbindung enthaltend mindestens zwei alkoholische Hydroxylgruppen und/oder phenolische Hydroxylgruppen im Molekül mit Epichlorhydrin, Glycerindichlorhydrin oder mit $\beta$-Methylepichlorhydrin unter alkalischen Bedingungen oder in Anwesenheit eines sauren Katalysators und anschliessende Alkalibehandlung erhalten werden können. Beispiele für Verbindungen mit mindestens zwei alkoholischen Hydroxylgruppen und/oder phenolischen Hydroxylgruppen im Molekül sind aliphatische Alkohole, wie Ethylenglykol, Diethylenglykol und höhere Poly-(oxyethylen)-glykole, Propan-1,2-diol, Propan- 1,3-diol oder Poly-(oxypropylen)-glykole, Butan-1,4-diol oder Poly-(oxybutylen)-glykole, Pentan-1,5-diol, Neopentylglykol (2,2-Dimethylpropandiol), Hexan-1,6-diol, Octan-1,8-diol, Decan-1,10-diol oder Dodecan-1,12-diol; Hexan-2,4,6-triol, Glycerin, 1,1,1-Trimethylolethan, 1,1,1-Trimethylolpropan, Pentaerythrit, Sorbit oder Polyepichlorhydrine; oder cycloaliphatische Alkohole, wie 1,3- oder 1,4-Dihydroxycyclohexan, 1,4-Cyclohexandimethanol, Bis-(4-hydroxycyclohexyl)-methan, 2,2-Bis-(4-hydroxycyclohexyl)-propan oder 1,1 -Bis-(hydroxy-methyl)-cyclohex-3-en; oder Alkohole enthaltend aromatische Gruppen, wie N,N-Bis-(2-hydroxyethyl)-anilin oder p,p′-Bis-(2-hydroxyethylamino)-diphenylmethan; oder ein- oder mehrkernige Polyphenole, wie Resorcin, Hydrochinon, Bis-(4-hydroxyphenyl)-methan, 2,2,-Bis-(4-hydroxyphenyl)-propan, bromiertes 2,2,-Bis-(4-hydroxyphenyl)-propan, Bis-(4-hydroxyphenyl)-ether, Bis-(4-hydroxyphenyl)-sulfon, 1,1,2,2-Tetrakis-(4-hydroxyphenyl)-ethan oder Novolake, die durch Kondensation von Aldehyden, wie Formaldehyd, Acetaldehyd, Chloral oder Furfuraldehyd mit gegebenenfalls alkyl- oder halogen-substituierten Phenolen, wie Phenol, den oben beschriebenen Bisphenolen, 2- oder 4-Methylphenol, 4-tert.Butylphenol, p-Nonylphenol oder 4-Chlorphenol erhältlich sind.

III) Poly-(N-glycidyl)-verbindungen, die beispielsweise durch Dehydrochlorierung von Reaktionsprodukten von Epichlorhydrin mit Aminen, die mindestens zwei Aminowasserstoffatome enthalten, hergestellt werden können. Beispiele für Amine, die solchen Epoxidharzen zugrunde liegen, sind aliphatische Amine, wie Hexamethylendiamin oder n-Butylamin; aromatische Amine, wie Anilin, p- Toluidin, Bis-(4-aminophenyl)-methan, Bis-(4-aminophenyl)-ether, Bis-(4-aminophenyl)-sulfon, 4,4′-Diaminobiphenyl oder 3,3′-Diaminobiphenyl; oder araliphatische Amine, wie m-Xylylendiamin.
Zu den Poly-(N-glycidyl)-verbindungen zählen aber auch Triglycidylisocyanurat, N,N′-Diglycidylderivate von Cycloalkylenharnstoffen, wie von Ethylenharnstoff oder von 1,3-Propylenharnstoff, und N,N′Diglycidylderivate von Hydantoinen, wie von 5,5-Dimethylhydantoin.

IV) Poly-(S-glycidyl)-verbindungen, wie beispielsweise Di-S-glycidylderivate, die sich von Dithiolen, wie Ethan-1,2-dithiol oder von Bis-(4-mercaptomethylphenyl)-ether, ableiten.

V) Cycloaliphatische Epoxidharze oder Epoxidierungsprodukte von Dienen oder Polyenen, wie cycloaliphatische Epoxidharze, die beispielsweise durch Epoxidierung ethylenisch ungesättigter cycloaliphatischer Verbindungen hergestellt werden können. Beispiele dafür sind 1,2-Bis-(2,3-epoxycyclopentyloxy)-ethan, 2,3-Epoxycyclopentylglycidylether, Cyclohexan-1,2-dicarbonsäure Diglycidylester, 3,4-Epoxycyclohexylglycidylether, Bis-(2,3-epoxycyclopentyl)-ether, Bis-(3,4-epoxycyclohexyl)-ether, 5(6)-Glycidyl-2-(1,2-epoxyethyl)-bicyclo[2.2.1]heptan, Dicyclopentadiendioxid, Cyclohexa-1,3-diendioxid, 3,4-Epoxy-6-methylcyclohexylmethyl-3′,4′-epoxy-6′-methylcyclohexancarboxylat oder 3,4-Epoxycyclohexylmethyl-3′,4′-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu solchen Verbindungen zählen beispielsweise das N,N,O-Triglycidylderivat des 4-Aminophenols, das N,N,O-Triglycidylderivat des 3-Aminophenols, der Glycidyletherglycidylester der Salicylsäure, N-Glycidyl-N′-(2-glycidyloxipropyl)-5,5-dimethylhydantoin oder 2-Glycidyloxy-1,3-bis-(5,5-dimethyl-1-glycidylhydantoin-3-yl)-propan.

Bevorzugte Komponenten A) sind Glycidylether, insbesondere Diglycidylether auf Bisphenol Basis, wie auf Basis von Bisphenol F oder insbesondere auf Basis von Bisphenol A, und glycidylisierte Novolake, insbesondere glycidylisierte Novolake auf Basis von Phenol-Formaldehyd Novolak oder auf Basis von Kresol-Formaldehyd Novolak.

Als Komponente A2) der erfindungsgemässen Zusammensetzungen eignen sich Polyhydroxyverbindungen, beispielsweise mehrfunktionelle Alkohole wie Ethylenglykol, Propylenglykol, Glycerin, Trimethylolpropan oder Pentaerythrit. Auch Polyetherpolyole, z.B. Polyetherpolyole auf der Basis von Polyethylenoxide oder auf der Basis von Polypropylenoxiden können verwendet werden. Bevorzugt sind Polyetherpolyole mit Molgewichten zwischen 200 und 10000, insbesondere 500 und 3000. Dem Polyurethan-Fachmann sind eine grosse Anzahl derartiger Polyetherpolyole bekannt; sie werden von zahlreichen Herstellern angeboten und über ihr Molekulargewicht (Zahlenmittel), das aus Endgruppenbestimmungen errechenbar ist, charakterisiert. Weitere geeignete Polyetherpolyole sind Polyetherpolyole auf der Basis von Polytetrahydrofuran.

Anstelle von Polyetherpolyolen können auch Polyesterpolyole engesetzt werden. Geeignete Polyesterpolyole sind Umsetzungsprodukte mehrfunktioneller Säuren mit mehrfunktionellen Alkoholen, beispielsweise Polyester auf der Basis aliphatischer und/oder aromatischer Dicarbonsäuren und mehrfunktioneller Alkohole

der Funktionalität 2-4. So können Polyester aus Adipinsäure, Sebacinsäure, Phthalsäure, Hydrophthalsäure und/oder Trimellitsäure einerseits und Ethylenglykol, Propylenglykol, Neopentylglykol, Hexanglykol, Glycerin und/oder Trimethylolpropan andererseits eingesetzt werden. Geeignet sind insbesondere Polyesterpolyole mit Molekulargewicht (Zahlenmittel) zwischen 500 und 5000, insbesondere zwischen 600 und 2000. Weitere geeignete Polyesterpolyole sind die Umsetzungsprodukte von Caprolacton mit Alkoholen der Funktionalität von 2-4, so beispielsweise das Additionsprodukt von 1-5 Mol Caprolacton an 1 Mol Ethylenglykol, Propylenglykol, Glycerin und/oder Trimethylolpropan.

Eine weitere Klasse mehrfunktioneller Alkohole sind Polybutadienole. Hierbei handelt es sich um Oligomere auf der Basis von Butadien, die als Endgruppen OH-Gruppen aufweisen. Geeignet sind hier Produkte im Molekulargewichtsbereich 200-4000, insbesondere 500-3000.

Als Komponente B1) der erfindungsgemässen Zusammensetzungen eignen sich im allgemeinen alle hitzeaktivierbaren Härter für Epoxidharze. Dazu zählen beispielsweise aromatische Amine, wie Bis-(4-aminophenyl)-methan, Anilin-Formaldehyd-Harze, Bis-(4-aminophenyl)-sulfon oder 2,2-Bis-(4-aminophenyl)-propan; Polyaminoamide, wie solche aus aliphatischen Polyaminen und dimerisierten oder trimerisierten Fettsäuren; oder die Amide einschliesslich der substituierten Harnstoffe, insbesondere der Harnstoffe mit aromatischen Resten, wie N-(4-Chlorphenyl-)N′,N′-dimethylharnstoff, N-(2-hydroxyphenyl)-N′,N′-dimethylharnstoff oder 2,4-Bis-(N,N-dimethylureido)-toluol; oder Polyphenole, wie Resorcin, Hydrochinon, 2,2-Bis-(4-hydroxyphenyl)-propan (Bisphenol A) und Novolake auf Basis von Mono- oder Polyphenolen, wie Phenol oder Kresolen, und Aldehyden, wie Formaldehyd, Acetaldehyd oder Chloral; oder Anhydride von Polycarbonsäuren, wie Phthalsäureanhydrid, Tetrahydrophthalsäureanhydrid, Hexahydrophthalsäureanhydrid, Hexachlorendomethylentetrahydrophthalsäureanhydrid, Pyromellitsäureanhydrid oder Benzophenon-3,3′,4,4′-tetracarbonsäuredianhydrid; oder katalytisch wirkende Härtungsmittel, wie beispielsweise tertiäre Amine, z.B. 2,4,6-Tris-(dimethylaminomethyl)-phenol; Imidazole oder Mannichbasen, wie beispielsweise 1-Methylimidazol, 2-Methylimidazol, 2-Phenylimidazol, 1-Benzyl-2-methylimidazol oder 1-Cyanoethyl-2-methylimidazol; Zinnsalze von Alkansäuren, wie beispielsweise Zinnoctoat; Friedel-Crafts-Katalysatoren, wie beispielsweise Bortrifluorid und Bortrichlorid und deren Komplexe und Chelate, die durch Umsetzung von Bortrifluorid mit beispielsweise 1,3-Diketonen, Aminen oder Ethern erhalten werden; oder Amidine, wie beispielsweise Dicyandiamid oder 1-Cyan-3-(niedrigalkyl)-guanidine, wie z.B. die 3-Methyl-, 3,3-Dimethyl- oder 3,3-Diethylderivate.

Bevorzugte Komponenten B) sind Amidine, insbesondere Dicyandiamid.

Als Komponente B2) können mehrfunktionelle Isocyanate verwendet werden. Geeignet sind hier sowohl aromatische als auch aliphatische, monocyclische wie polycyclische, mehrfunktionelle Isocyanatverbindungen. So können als aromatische Isocyanatverbindungen Toluylendiisocyanat oder Diphenylmethandiisocyanat eingesetzt werden. Besonders geeignet ist technisches Diphenylmethandiisocyanat mit einem Gehalt an höherfunktionellen Diisocyanaten und einer Funktionalität an Isocyanatgruppen grösser 2. Ein weiteres geeignetes aromatisches Diisocyanat ist Xylylendiisocyanat. Darüber hianaus kann eine Vielzahl aliphatischer Isocyanate der Funktionalität 2 und höher eigesetzt werden. Beispiele sind hier Isophorondiisocyanat und Dicyclohexylmethandiisocyanat als cyclische aliphatische Diisocyanate. Weitere Beispiele sind aliphatische, gradkettige Diisocyanate, wie sie durch Phosgenisierung von Diaminen gewonnen werden, z.B. Tetramethylendiisocyanat oder Hexamethylendiisocyanat.

Komponente C) ist ein ausgewähltes flüssiges, elastomeres Copolymeres auf Butadienbasis und enthält vorzugsweise gegenüber Epoxidharzen reaktive Endgruppen.

Diese Komponente kann als solche eingesetzt werden oder als Addukt an ein Epoxidharz, vorzugsweise an einen Diglycidylether auf Bisphenolbasis.

Unter einem "flüssigen Copolymeren" ist im Rahmen dieser Beschreibung eine Verbindung zu verstehen, die bei Temperaturen unterhalb von 80°C fliessfähig ist und sich ohne weiteres mit einem Epoxidharz mischen lässt.

Beispiele für polare, ethylenisch ungesättigte Comonomere zur Herstellung von Komponente C) sind Monomere mit polaren Gruppen, wie Carboxyl-, Amid-, Ester- oder Nitrilgruppen oder Halogenatomen. Dazu zählen beispielsweise (Meth)acrylsäure, Ester der (Meth)acrylsäure, beispielsweise die Methyl- oder die Ethylester, Amide der (Meth)acrylsäure, Fumarsäure, Itaconsäure, Maleinsäure oder deren Ester oder Halbester, beispielsweise die Mono- oder Dimethylester, oder Maleinsäure- oder Itaconsäureanhydrid; Vinylester, beispielsweise Vinylacetat, polare Styrole, wie kernchlorierte oder kernbromierte Styrole, oder insbesondere Acrylnitiil oder Methacrylnitril.

Neben polaren, ethylenisch ungesättigten Comonomeren kann Komponente C) noch weitere unpolare, ethylenisch ungesättigte Comonomere enthalten. Beispiele dafür sind Ethylen, Propylen oder insbesondere Styrol oder mit unpolaren Gruppen substituierte Styrole, wie Vinyltoluol.

Bei Komponente C) kann es sich um statistische Copolymere, Block-Copolymere oder um Pfropf-Copolymere handeln.

Der Anteil der Comonomeren in Komponente C) kann in weiten Bereichen schwanken.

Diese Komponente wird so gewählt, dass sie in Kombination mit den Komponenten A) und B) verträglich ist und dass sich in der Mischung eine Elastomerphase ausbildet. Eine solche Elastomerphase ist in der Regel durch eine Glasübergangstemperatur von kleiner als 0 °C gekennzeichnet. Dabei kann es sich um homogene oder um heterogene Systeme handeln.

Die Auswahlkriterien bei der Herstellung von miteinander verträglichen Polymergemischen sind an sich bekannt und sind beispielsweise von C.B. Bucknall in "Toughened Plastics". Kapitel 2, Applied Science Publishers Ltd., London 1977, beschrieben.

Die durchschnittlichen Molekulargewichte (Zahlenmittel) der flüssigen Butadien-Copolymeren betragen im allgemeinen 500-10'000, insbesondere 1'000-5'000, ganz besonders 1'000-3'000. Der Acrylnitrilgehalt der bevorzugten flüssigen Butadien-Copolymeren beträgt im allgemeinen weniger als 50 Gew.%, insbesondere 8 bis 30 Gew.%, bezogen auf den Gesamtmonomergehalt.

Besonders bevorzugte Komponenten C) sind flüssige Butadien-Acrylnitril Copolymere mit gegenüber Epoxidharzen reaktiven funktionellen Gruppen.

Beispiele für solche Copolymeren sind carboxyl- oder hydroxyl- oder aminhaltige Butadien-Acrylnitril Kautschuke, beispielsweise Verbindungen vom Typ HYCAR® der Fa. B.F. Goodrich.

Komponenten A1) und C) können auch in Form eines Adduktes eines Butadien-Copolymeren, insbesondere eines Butadien-Acrylnitril Copolymeren, mit gegenüber Epoxidgruppen reaktiven funktionellen Gruppen an ein Epoxidharz eingesetzt werden.

Die Herstellung solcher Addukte erfolgt in an sich bekannter Weise beispielsweise durch Erhitzen des reaktiven Butadien-Acrylnitril Kautschuks, beispielsweise eines carboxyl-terminierten Copolymeren, und des Epoxidharzes mit gegebenenfalls einem Katalysator, wie Triphenylphosphin, einem tertiären Amin, einem Ammonium- oder Phosphoniumsalz oder Chrom-Acetylacetonat, so dass ein schmelzbares aber noch in Kombination mit Epoxidharzen härtbares Vorkondensat entsteht.

Bevorzugte Zusammensetzungen dieser Erfindung enthalten als Komponente D) Verbindungen der Formel I, worin einer der Reste $R_1$ bis $R_4$ Wasserstoff, $C_1$-$C_4$Alkyl, $C_1$-$C_4$Alkoxy, Trifluormethyl oder Halogen bedeutet und die anderen drei Reste Wasserstoff sind.

Bevorzugte Zusammensetzungen dieser Erfindung enthalten als Komponente D) Verbindungen der Formel I, worin der Rest $R_5$ $C_1$-$C_4$Alkyl und insbesondere Wasserstoff bedeutet und der Rest $R_6$ Wasserstoff ist.

Bevorzugte Zusammensetzungen dieser Erfindung enthalten als Komponente D) Verbindungen der Formel I, worin die Reste $R_7$ und $R_8$ unabhängig voneinander Wasserstoff, $C_1$-$C_8$Alkyl, Allyl, $C_1$-$C_4$Alkoxy, Halogen, Phenyl, Tolyl, Cyclohexyl oder eine Gruppe $-CH_2-CH_2-COOR_{12}$ bedeuten und $R_9$ Wasserstoff, $C_1$-$C_{18}$Alkyl oder durch ein oder mehrere Sauerstoffatome unterbrochenes $C_3$-$C_{20}$Alkyl bedeutet.

Bevorzugt verwendet man Verbindungen der Formel I als Komponete D), worin die phenolische OH-Gruppe in para- oder ortho-Position zur Brücke $-CR_5R_6-$ steht.

Besonders bevorzugte Korrisionsinhibitoren D) sind Verbindungen der Formel III

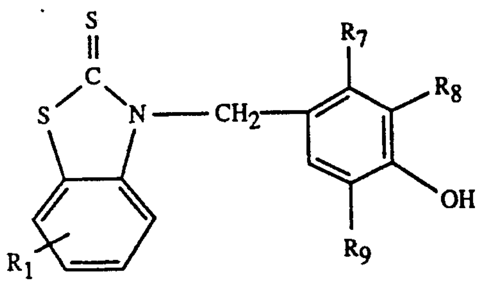

(III),

worin $R_1$ Wasserstoff, $C_1$-$C_4$Alkyl, $C_1$-$C_4$Alkoxy, Trifluormethyl oder Chlor ist, $R_7$ Wasserstoff, Methyl oder Hydroxyl ist und $R_8$ und $R_9$ unabhängig voneinander Wasserstoff, $C_1$-$C_8$Alkyl, Allyl, Chlor, Methoxy, Benzyl, Phenyl, Tolyl oder Cyclohexyl sind.

Besonders bevorzugte Korrisionsinhibitoren D) sind Verbindungen der Formel IV

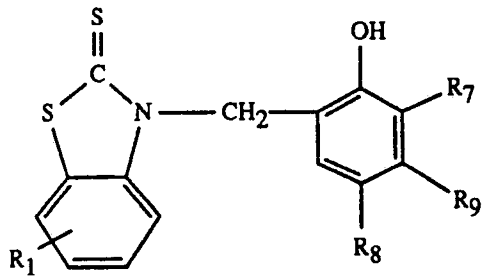

(IV),

worin $R_1$ Wasserstoff, $C_1$-$C_4$Alkyl, $C_1$-$C_4$Alkoxy, Trifluormethyl oder Chlor ist, $R_7$ und $R_8$ unabhängig voneinander Wasserstoff, $C_1$-$C_8$Alkyl, Benzyl, Phenyl, Tolyl, Cyclohexyl oder eine Gruppe der Formel IIa sind

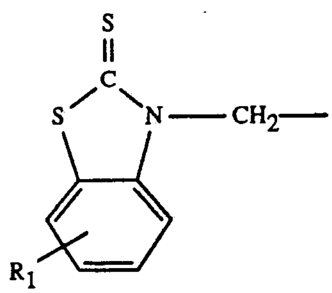

(IIa),

und $R_9$ Wasserstoff, $C_1$-$C_{18}$Alkyl oder $C_3$-$C_{18}$Alkenyl ist.

Weitere Beispiele für bevorzugte Verbindungen der Formel I sind in der EP-A-259,254 zu finden.

Komponenten A), B), gegebenenfalls C) und D) in den erfindungsgemässen Zusammensetzungen sollten miteinander verträglich sein. Die Auswahl dieser Komponenten erfolgt im allgemeinen so, dass im härtbaren Gemisch oberhalb dessen Erweichungstemperatur, vorzugsweise zwischen 100 und 180° C, keine sichtbare Phasentrennung erfolgt.

Komponente C) sollte sich zumindest bei erhöhter Temperatur im Epoxidharz A1) lösen. Komponenten A1) und C) sollten gemäss den oben aufgeführten Kriterien ausgewählt werden. Komponenten A1) und C) werden vorzugsweise so ausgewählt, dass bei der Härtung der Zusammensetzung ein Mehrphasensystem entsteht.

Wünscht man Produkte mit hoher Festigkeit, so wird der Anteil der Komponente C), bezogen auf die Menge an A1), B1), C) und D), im allgemeinen 60 Gew.%, vorzugsweise 50 Gew.%, nicht überschreiten. Die untere Grenze richtet sich nach den gewünschten Eigenschaften, beispielsweise der Schälfestigkeit. In der Regel sollte Komponente C) mehr als 5 Gew.%, bevorzugt mehr als 10 Gew.%, ausmachen.

Dem Polyurethan-Fachmann ist bekannt, dass die Vernetzungsdichte und damit Härte und Sprödigkeit der Polyurethane mit der Funktionalität der Isocyanatkomponente B2) oder auch der Polyhydroxyverbindung A2) zunimmt. Es sei hier auf die allgemeine Fachliteratur verwiesen, z.B. auf die Monographie von Saunders und Frisch "Polyurethanes, Chemistry and Technology", Band XVI der Serie High Polymers "Interscience Publishers" New York-London, Teil I (1962) und Teil II (1964).

Der Anteil der Komponente A) an der Gesamtmenge aus A), B), gegebenenfalls C) und D) kann ebenfalls in weiten Grenzen variiert werden. Für Produkte mit einer hohen Festigkeit wählt man im allgemeinen grössere Mengen an Komponente A), beispielsweise 40 bis 90 Gew.%, bevorzugt 60 bis 80 Gew.%.

Die Menge an Härter B1), bezogen auf die Komponente A1), ist im allgemeinen vom verwendeten Härtertyp abhängig und dem Fachmann an sich bekannt. Bei der Härtung der Komponente A1) verwendet man im Falle des besonders bevorzugten Dicyandiamids pro Mol Epoxidgruppen vorzugsweise 0,1 bis 0,5 Mol des Härters.

Bei der Herstellung ber Polyurethan-Produkte ist das Verhältnis von OH-Gruppen der Alkoholkomponente zu Isocyanatgruppen von Bedeutung. Dieses liegt im allgemeinen zwischen 1:2 uns 1:10. Dabei werden mit höheren Isocyanatüberschüssen eher niedrigviskose Polyurethan-Produkte erhalten, während niedere Isocyanatüberschüsse hochviskose, meist nur noch spachtelbare Zubereitungen liefern.

Die Menge an Korrosionsinhibitor D) wird so gewählt, dass ein für den beabsichtigten Zweck wirksamer Schutz erreicht wird. Im allgemeinen beträgt der Anteil von Komponente D), bezogen auf die Summe von

A), B), C) und D), etwa 0,1 bis 10, insbesondere 0,5 bis 5 Gew.%.

Die erfindungsgemässen Epoxidharzzusammensetzungen enthalten gegebenenfalls noch einen Härtungsbeschleuniger E). Art und Menge von Komponente E) hängen in der Regel vom verwendeten Härtertyp ab und sind dem Fachmann auf der Gebiet der Epoxidhärtung an sich bekannt. Einzelheiten findet man im "Epoxy-Handbook" von Lee and Neville (McGraw Hill, New York 1969).

Beispiele für bevorzugte Härtungsbeschleuniger sind tertiäre Amine, wie Benzyldimethylamin, 2,4,6-Tris-(dimethylaminomethyl)-phenol, l-Methylimidazol oder 2-Ethyl-4-methylimidazol; oder substituierte Harnstoffe, wie beispielsweise N-(4-Chlorphenyl)-N′,N′-dimethylharnstoff oder N-(3-Chlor-4-methylphenyl)-N′,N′-dimethylharnstoff (Chlortoluron).

Die Härtungstemperaturen der erfindungsgemässen Zusammensetzungen liegen bei Verwendung von Dicyandiamidhärtersystemen vorzugsweise zwischen 80 und 280 °C, besonders bevorzugt zwischen 100 und 200 °C und bei Verwendung von phenolischen Härtersystemen etwa zwischen 100 und 250 °C.

Die Härtung kann gewünschtenfalls auch in zwei Stufen vorgenommen werden, indem man z.B. den Härtungsvorgang unterbricht oder die härtbare Mischung bei tieferen Temperaturen teilweise härten lässt. Die dabei erhaltenen Produkte sind noch schmelzbare und lösliche Präkondensate (sogenannte "B-Stufenharze") und eignen sich beispielsweise als Pressmassen, Sinterpulver oder zur Herstellung von Prepregs.

Gewünschtenfalls kann man den härtbaren Gemischen zur Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäure, zusetzen. Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Wollastonit, Kaolin, Kieselsäureaerogel, Kreide, Talk oder Metallpulver, z.B. Aluminiumpulver oder Eisenpulver, ferner Pigmente und Farbstoffe, wie Russ, Oxidfarben und Titandioxid, sowie Flammschutzmittel, Thixotropiemittel, Verlaufmittel (die zum Teil auch als Formtrennmittel Anwendung finden), wie Silicone, Wachse und Stearate, oder Haftvermittler, Antioxidantien und Lichtschutzmittel enthalten.

Die erfindungsgemässen Polyurethanzubereitungen können weiterhin verschiedene Hilfsstoffe enthalten. Verwendet werden können hier z.B. Füllstoffe. Als Füllstoffe geeignet sind gegenüber Isocyanaten nichtreaktive, anorganische Verbindungen wie z.B. Kreide oder Kalkmehl, gefällte und/oder pyrogene Kieselsäuren, Zeolithe, Bentonite, gemahlene Mineralien sowie andere dem auf dem Arbeitsgebiet tätigen Fachmann bekannte anorganische Füllstoffe, insbesondere Faserkurzschnitte und anderes. Für manche Anwendungen sind Füllstoffe bevorzugt, die den Zubereitungen Thixotropie verleihen, so beispielsweise quellbare Kunststoffe, insbesondere PVC.

Ausser den genannten Verbindungen können die erfindungsgemässen Polyurethanzubereitungen noch weitere Hilfsstoffe, beispielsweise Lösungsmittel enthalten. Geeignet sind Lösungsmittel, die ihrerseits nicht mit Isocyanatgruppen reagieren, so z.B. halogenierte Kohlenwasserstoffe, Ester, Ketone, aromatische Kohlenwasserstoffe u.a.. Auch Weichmacher, Flammschutzmittel, Verzögerer, Farbstoffe, und Alterungsschutzmittel, wie sie in Polyurethan-Klebstoffen und Dichtungsmassen bekannt sind, können mit eingearbeitet werden.

Für manche Anwendungen ist es wünschenswert, den erfindungsgemässen Polyurethanzubereitungen Schaumstabilisatoren zuzusetzen. Als Schaumstabilisatoren können sogenannte Silikotenside verwendet werden. Es sind dies Blockcopolymere, die aus einem Polysiloxanblock und einem oder mehreren Polyoxyethylen- und/oder Polyoxypropylenblöcken aufgebaut sind. Die erfindungsgemässen Polyurethanzubereitungen können weiterhin flammhemmende und weichmachende Zusätze enthalten. Gängig sind Phosphor- und/oder Halogenatome enthaltende Verbindungen, wie Trikresylphosphat, Diphenylkresylphosphat, Tris-2-chlor-ethylphosphat, Tris-2-chlor-propylphosphat und Tris-2,3-dibrompropylphosphat. Zusätzlich können Flammschutzmittel verwendet werden, z.B. Chlorparaffine, Halogenphosphide, Ammoniumphosphat und halogen- und phosphorhaltige Harze. Als weitere Zusätze sind für manche Anwendungen Weichmacher von Bedeutung. Geeignet sind hier beispielsweise Ester der Phthalsäure oder Ester langkettiger Dicarbonsäuren, beispielsweise Sebacinsäure oder Azelainsäureester. Auch sogenannte Epoxidweichmacher, z.B. epoxidierte Fettsäurederivate können hier eingesetzt werden.

Weitere mögliche Zusätze sind basische Beschleuniger. Diese sollten nicht verwendet werden, wenn Carbonsäureanhydride als Beschleuniger eingesetzt werden. Basische Beschleuniger sind beispielsweise tertiäre Basen wie Bis-(N,N′-dimethylamino)-diethylether, Dimethylamino-cyclohexan, N,N-Dimethyl-benzylamin, N-Methylmorpholin sowie die Umsetzungsprodukte von Dialkyl-($\beta$-hydroxyethyl)-amin mit Monoisocyanaten und Veresterungsprodukte von Dialkyl-($\beta$-hydroxyethyl)-amin und Dicarbonsäuren. Ein weiterer

wichtiger Beschleuniger ist das 1,4-Diamino-bicyclo-[2.2.2]-octan. Ferner können nichtbasische Substanzen als Beschleuniger verwendet werden. Hier seien Metallverbindungen genannt, beispielsweise Eisenpentacarbonyl, Nickeltetracarbonyl, Eisenacetylacetonat sowie Zinn-(II)-2-ethyl-hexoat, Dibutylzinndilaurat oder Molybdänglykolat.

Die erfindungsgemässen Zusammensetzungen lassen sich als Klebmittel, Dicht- und Fugenmassen ganz allgemein zur Herstellung von gehärteten Produkten einsetzen, und können in der dem jeweils speziellen Anwendungsgebiet angepassten Formulierung und Konsistenz eingesetzt werden. Die erfindungsgemässen Epoxidharz-Zusammensetzungen werden insbesondere in Form von Einkomponentenformulierungen eingesetzt.

Die härtbaren Zusammensetzungen können in flüssiger, pastenförmiger oder fester Form vorliegen. Feste oder wachsartige Formulierungen lassen sich besonders in Kombination mit den üblichen Füll- und Zusatzstoffen als Schmelzkleber einsetzen.

Als zu verklebende Substrate eignen sich beispielsweise Metalle, insbesondere Stahlbleche.

Die gehärteten Produkte zeichnen sich durch eine überraschend hohe Korrosionsbeständigkeit aus. Die Erfindung betrifft daher auch die gehärteten Produkte, die durch Erhitzen der erfindungsgemässen Zusammensetzungen erhältlich sind.

Ferner betrifft die Erfindung die Verwendung der Verbindungen der Formel I als Korrosionsschutzmittel in Dicht- oder Fugenmassen auf Epoxidharzbasis oder insbesondere in Klebmitteln auf Epoxidharzbasis.

Die folgenden Beispiele erläutern die Erfindung. Mengenangaben beziehen sich auf Gewichtsteile, sofern nichts anderes angegeben ist.

## Allgemeine Arbeitsvorschrift

Eine Klebstofformulierung gemäss den folgenden Beispielen wird auf einer Fläche von 120 x 60 mm auf ein entfettetes Stahlblech (150 x 70 x 1 mm) aufgetragen. Die Schichtdicke beträgt 0,3 mm. Die Härtung erfolgt bei 180 °C im Umluftofen. Nach dem Abkühlen auf 23 °C wird die nicht beschichtete Stahlfläche mit einer Zweikomponenten Epoxidharzfarbe behandelt. 24 Stunden nach der Aushärtung werden die Prüfkörper während drei Zyklen im nachfolgend beschriebenen Klimawechseltest gealtert:

| | |
|---|---|
| 1 Tag | Salzsprühtest nach DIN SS 50'021 |
| 4 Tage | Schwitzwassertest nach DIN SK 50'017 und |
| 2 Tage | Lagerung bei 23 °C. |

Nach drei solchen Zyklen wird der flächenmässige Anteil der Unterrostung im Verhältnis zur Gesamtfläche der aufgetragenen Klebstoffschicht beurteilt.

## Herstellung der Butadien-Elastomer Adduktes (Addukt A)

72,8 g eines flüssigen Diglycidylethers auf Bisphenol A Basis (Epoxidgehalt: 5,1-5,4 Aequ./kg), 6,8 g Bisphenol A und 20,4 g eines carboxyl-terminierten Butadien-Acrylnitril Copolymeren mit einder Säurezahl von 32 (Hycar® CTBN 1300 x 13 der Fa. B.F. Goodrich) werden während 2 Stunden auf 150 °C erhitzt. Man erhält ein flüssiges Addukt mit freien Epoxidgruppen (Epoxidgehalt: 3,0-3,3 Aequ./kg).

| Beispiel 1 : Folgende Klebstofformulierung wird getestet: | |
|---|---|
| 25,1 g | Addukt A |
| 48,8 g | flüssiger Diglycidylether auf Bisphenol A Basis (Epoxidgehalt: 5,1-5,4 Aequ./kg) |
| 10,8 g | flüssiger Diglycidylether auf Basis von 1,4-Butandiol (Epoxidgehalt: 8,5-9,5 Aequ./kg) |
| 5,5 g | Dicyandiamid |
| 4,5 g | Chlortoluron |
| 0,4 g | Netzmittel (Polyoxyethylen-Sorbitan Monolaurat) |
| 4,4 g | Thixotropiemittel (hydrophobe Kieselsäure). |

Nach dreimaligem Passieren des oben beschriebenen Klimawechseltests sind 30-50 % der aufgetragenen Klebstoffschicht unterrostet.

Beispiel 2:

Eine modifizierte Formulierung gemäss Beispiel 1 wird getestet, die zusätzlich mit 0,5 g eines Korrosionsinhibitors der Formel Ia versehen ist:

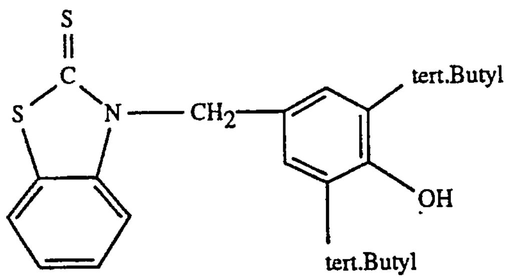

(Ia).

Nach dreimaligem Passieren des oben beschriebenen Klimawechseltests sind 0-10 % der aufgetragenen Klebstoffschicht unterrostet.

Beispiel 3:

Eine modifizierte Formulierung gemäss Beispiel 1 wird getestet, die zusätzlich mit 0,5 g eines Korrosionsinhibitors der Formel Ib versehen ist:

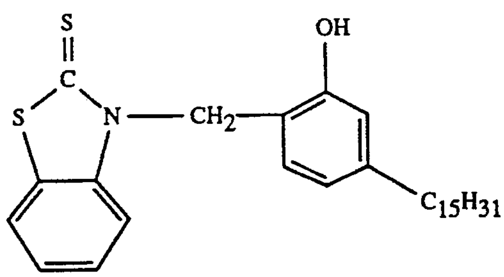

(Ib).

Nach dreimaligem Passieren des oben beschriebenen Klimawechseltests wird keine Unterrostung beobachtet.

Beispiel 4:

Eine modifizierte Formulierung gemäss Beispiel 1 wird getestet, die zusätzlich mit 0,5 g eines Korrosionsinhibitors der Formel Ic versehen ist:

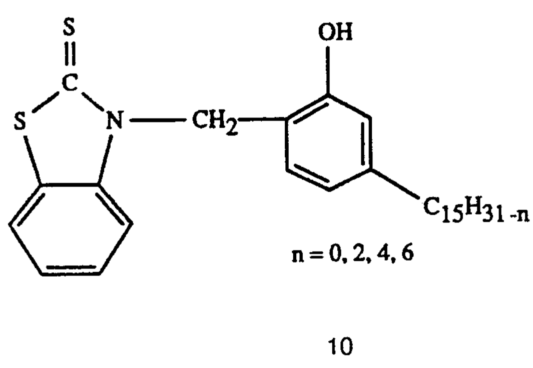

(Ic).

Nach dreimaligem Passieren des oben beschriebenen Klimawechseltests sind 3 % der aufgetragenen Klebstoffschicht unterrostet.

Beispiel 5:

Eine modifizierte Formulierung gemäss Beispiel 1 wird getestet, die zusätzlich mit 0,5 g eines Korrosionsinhibitors der Formel Ia gemäss Beispiel 2 versehen ist. In Abänderung zu Beispiel 2 wird der Korrosionsinhibitor nicht als Feststoff zugegeben, sondern vorgängig in dem flüssigen Diglyidylether auf Basis eines aliphatischen Diols gelöst und dann in die Klebstofformulierung eingerührt. Nach dreimaligem Passieren des oben beschriebenen Klimawechseltests wird keine Unterrostung beobachtet.

| Beispiel 6 : Folgende Klebstoffformulierung wird getestet: | |
|---|---|
| a) 11 g | Polyetherpolyol auf der Basis von Propylenoxid und einem Triol (Desmophen® 550 U der Fa. Bayer) |
| 60 g | Kreidemehl |
| 6,5 g | Wasseradsorbens auf Zeolithbasis (50 % in Ricinusoel) |
| 0,5 g | diverse Sulfonsäuren |
| 22 g | Ricinusoel |
| 25 g | techniches Diphenylmethandiisocyanat (Baymidur® K 88 der Fa. Bayer, Isocyanatgehalt 30-32 %) |

b) eine modifizierte Formulierung gemäss a), die zusätzlich mit 0,5 g eines Korrosionsinhibitors der Formel Ia versehen ist.

c) eine modifizierte Formulierung gemäss a), die zusätzlich mit 1,0 g eines Korrosionsinhibitors der Formel Ia versehen ist.

Die Aushärtung erfolgt in Abänderung der allgemeinen Arbeitsvorschrift über 1 Stunde bei 100 °C. Nach dem Abkühlen auf Raumtemperatur wird das überstehende Metall mit Zinkspray beschichtet. Nach dreimaligem Passieren des oben beschriebenen Klimawechseltests wird eine Unterrostung bei a) von 60 %, bei b) von 30 % und bei c) von 10 % festgestellt.

## Ansprüche

1. Zusammensetzungen enthaltend

A1) ein Epoxidharz mit durchschnittlich zwei oder mehr 1,2-Epoxidgruppen pro Molekül, oder

A2) eine Polyhydroxyverbindung

B1) einen wärmeaktivierbaren Härter für das Epoxidharz, oder

B2) einen Isocyanathärter für die Polyhydroxyverbindung

C) falls Komponenete A ein Epoxidharz ist, ein flüssiges Copolymeres auf Basis von Butadien und mindestens einem polaren, ethylenisch ungesättigten Comonomeren, und

D) eine wirksame Menge eines Korrosionsinhibitors der Formel I

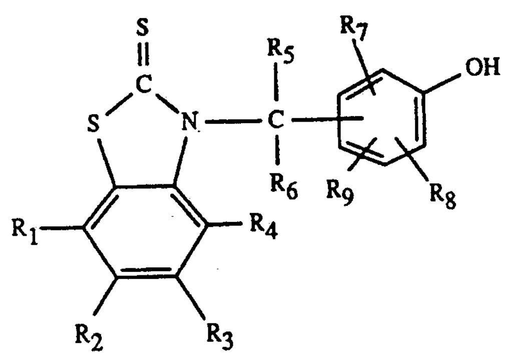

(I),

worin die Reste $R_1$, $R_2$, $R_3$ und $R_4$ unabhängig voneinander Wasserstoff, $C_1$-$C_{20}$Alkyl, $C_1$-$C_{20}$Alkoxy, $C_1$-$C_{20}$Alkylthio, $C_1$-$C_{20}$Alkylsulfonyl, $C_1$-$C_4$Halogenalkyl, Phenylthio, Benzylthio, Phenyl, $C_7$-$C_{15}$Alkylphenyl, $C_7$-$C_{10}$Phenylalkyl, Cyclopentyl, Cyclohexyl, Halogen, -COOH, -COO($C_1$-$C_4$Alkyl), -OH, -$NR_{10}R_{11}$ oder -$CONR_{10}R_{11}$ bedeuten, $R_5$ Wasserstoff oder $C_1$-$C_{12}$ Alkyl ist, $R_6$ Wasserstoff, $C_1$-$C_{12}$ Alkyl, Phenyl, Tolyl, Pyridyl, Thienyl oder Furyl ist, $R_7$ und $R_8$ unabhängig voneinander Wasserstoff, Halogen, $C_1$-$C_4$Alkoxy, $C_1$-$C_{20}$Alkyl, $C_3$-$C_{20}$Alkenyl, $C_7$-$C_{10}$Phenylalkyl, Phenyl, Cyclohexyl, Cyclopentyl,- $(CH_2)_m$-$COOR_{12}$, -$(CH_2)_m$-$CONR_{10}R_{11}$ oder eine Gruppe der Formel II bedeuten

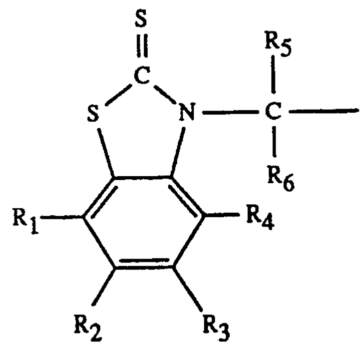

(II),

worin $R_1$ bis $R_6$ die oben definierte Bedeutung besitzen, $R_9$ Wasserstoff, $C_1$-$C_{20}$Alkyl, $C_3$-$C_{20}$Alkenyl oder Hydroxy bedeutet oder $R_8$ und $R_9$ zusammen einen Ring bilden, der am Phenolring anelliert ist und der ein carbocyclischer oder ein heterocyclischer Ring mit Sauerstoff, Stickstoff oder Schwefel als Heteroatome sein kann, welcher gegebenenfalls durch $C_1$-$C_4$Alkyl, $C_1$-$C_4$Alkoxy oder Halogen substituiert ist, $R_{10}$ und $R_{11}$ unabhängig voneinander Wasserstoff, $C_1$-$C_{20}$Alkyl, das gegebenenfalls mit Hydroxyl oder Halogen substituiert ist oder $C_3$-$C_{20}$Alkyl, das durch ein oder mehrere Sauerstoffatome unterbrochen ist, Cyclohexyl, Benzyl oder Phenyl bedeuten, oder worin die Reste $R_{10}$ und $R_{11}$ zusammen mit dem gemeinsamen Stickstoffatom eine Pyrrolidino-, Piperidino- oder Morpholinogruppe bilden und $R_{12}$ Wasserstoff, $C_1$-$C_{20}$Alkyl, das gegebenenfalls durch Hydroxyl oder Halogen substituiert ist, oder $C_3$-$C_{20}$Alkyl bedeutet, das durch ein oder mehrere Sauerstoffatome unterbrochen ist, und m 0,1 oder 2 ist.

2. Zusammensetzungen gemäss Anspruch 1, dadurch gekennzeichnet, dass Komponente A1) ein Glycidylether, insbesondere ein Diglycidylether auf Bisphenol Basis oder ein glycidylisierter Novolak, insbesondere ein glycidylisierter Novolak auf Basis von Phenol-Formaldehyd Novolak oder auf Basis von Kresol-Formaldehyd Novolak ist.

3. Zusammensetzungen gemäss Anspruch 2, dadurch gekennzeichnet, dass Komponente A1) ein Diglycidylether auf Basis von Bisphenol F oder insbesondere auf Basis von Bisphenol A ist.

4. Zusammensetzungen gemäss Anspruch 1, dadurch gekennzeichnet, dass Komponente A2) aus einem Polyetherpolyol oder einem Polyesterpolyol besteht.

5. Zusammensetzungen gemäss Anspruch 4, dadurch gekennzeichnet, dass die Komponete A2) ein Polyetherpolyol auf der Basis von Polyethylenoxid oder auf der Basis von Polypropylenoxid ist.

6. Zusammensetzungen gemäss Anspruch 1, dadurch gekennzeichnet, dass Komponente B1) ein Amidin ist, insbesondere Dicyandiamid.

7. Zusammensetzungen gemäss Anspruch 1, dadurch gekennzeichnet, dass Komponente B2) eine aromatische, mehrfunktionelle Isocyanatverbindung ist, insbesondere technisches Diphenylmethandiisocyanat mit einem Gehalt an höherfunktionellen Diisocyanaten und einer Funktionalität an Isocyanatgruppen grösser als 2.

8. Zusammensetzungen gemäss Anspruch 1, dadurch gekennzeichnet, dass, falls Komponenete A ein Epoxidharz ist, Komponente C) ein flüssiges Butadien-Acrylnitril Copolymeres mit gegenüber Epoxidharzen reaktiven funktionellen Gruppen ist oder ein Addukt eines Butadien-Acrylnitril Copolymeren mit gegenüber Epoxidgruppen reaktiven funktionellen Gruppen an ein Epoxidharz ist.

9. Zusammensetzungen gemäss Anspruch 1, dadurch gekennzeichnet, dass Komponente D) eine Verbindung der Formel I ist, worin einer der Reste $R_1$ bis $R_4$ Wasserstoff, $C_1$-$C_4$Alkyl, $C_1$-$C_4$Alkoxy, Trifluormethyl oder Halogen bedeutet und die anderen drei Reste Wasserstoff sind, der Rest $R_5$ $C_1$-$C_4$Alkyl und insbesondere Wasserstoff bedeutet, der Rest $R_6$ Wasserstoff ist und die Reste $R_7$ und $R_8$ unabhängig voneinander Wasserstoff, $C_1$-$C_8$Alkyl, Allyl, $C_1$-$C_4$Alkoxy, Halogen, Phenyl, Tolyl, Cyclohexyl oder eine Gruppe -$CH_2$-$CH_2$-$COOR_{12}$ bedeuten und Wasserstoff, $C_1$-$C_{18}$Alkyl oder durch ein oder mehrere Sauerstoffatome unterbrochenes $C_3$-$C_{20}$Alkyl bedeutet.

10. Zusammensetzungen gemäss Anspruch 1, dadurch gekennzeichnet, dass Komponente D) eine Verbindung der Formel III ist

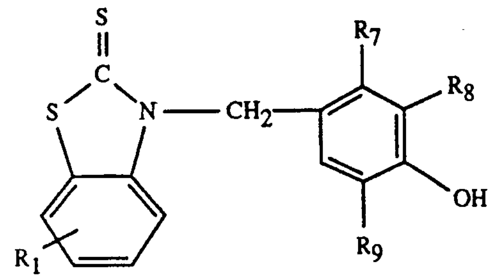

(III),

worin $R_1$ Wasserstoff, $C_1$-$C_4$Alkyl, $C_1$-$C_4$Alkoxy, Trifluormethyl oder Chlor ist, $R_7$ Wasserstoff, Methyl oder Hydroxyl ist und $R_8$ und $R_9$ unabhängig voneinander Wasserstoff, $C_1$-$C_8$Alkyl, Allyl, Chlor, Methoxy, Benzyl, Phenyl, Tolyl oder Cyclohexyl sind.

11. Zusammensetzungen gemäss Anspruch 1, dadurch gekennzeichnet, dass Komponente D) eine Verbindung der Formel IV ist

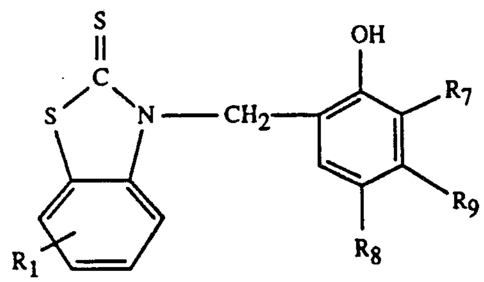

(IV),

worin $R_1$ Wasserstoff, $C_1$-$C_4$Alkyl, $C_1$-$C_4$Alkoxy, Trifluormethyl oder Chlor ist, $R_7$ und $R_8$ unabhängig voneinander Wasserstoff, $C_1$-$C_8$Alkyl, Benzyl, Phenyl, Tolyl, Cyclohexyl oder eine Gruppe der Formel IIa sind

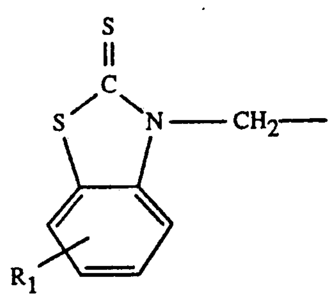

(IIa),

und $R_9$ Wasserstoff, $C_1$-$C_{18}$Alkyl oder $C_3$-$C_{18}$Alkenyl ist.

12. Zusammensetzungen gemäss Anspruch 1, dadurch gekennzeichnet, dass der Anteil der Komponete A) 30 bis 90 Gew.% beträgt, dass der Anteil der Komponente C) etwa 5 bis 50 Gew.% beträgt, und dass der Anteil der Komponente D), etwa 0,1 bis 10 Gew.% beträgt, wobei alle Anteile auf die Gesamtmenge an A), B), C) und D) bezogen sind.

13. Verfahren zur Herstellung gehärtete Produkte unter Verwendung der Zusammensetzungen gemäss Anspruch 1.